# EUROPEAN PATENT SPECIFICATION

(11) **EP 1 316 917 B1**
(45) Date of publication and mention of the grant of the patent: **11.05.2011**
(21) Application number: 02257144.2
(22) Date of filing: 15.10.2002
(51) Int. Cl.: G06T 1/00

(54) **Apparatus and method for embedding watermark into original information, transmitting watermarked information, and reconstructing the watermark**
Vorrichtung und Verfahren zum Einbetten eines digitalen Wassserzeichens in originale Information, Übertragen der mit Wasserzeichen versehenen Information und Rekonstruieren des Wasserzeichens
Appareil et procédé pour incorporer une filigrane numérique dans d'information originale, transmettre l'information au filigrane et reconstruire la filigrane

(30) Priority: 03.12.2001 KR 2001075900
(43) Date of publication of application: 04.06.2003
(73) Proprietor: SAMSUNG ELECTRONICS CO., LTD., Suwon-City, Kyungki-do (KR)
(72) Inventor: Oh, Sang-heun, Jangan-gu, Suwon-si, Gyeonggi-do (KR); Kim, Byung-jun, Paldal-gu, Suwon-si, Gyeonggi-do (KR); Park, Sung-wook, Seocho-gu, Seoul (KR)
(74) Representative: Robinson, Ian Michael

(56) References cited:
- WO-A-01/67740
- WO-A-99/63443
- US-A1- 2001 020 270
- WONG P W ED - INSTITUTE OF ELECTRICAL AND ELECTRONICS ENGINEERS: "A PUBLIC KEY WATERMARK FOR IMAGE VERIFICATION AND AUTHENTICATION" PROCEEDINGS OF THE 1998 INTERNATIONAL CONFERENCE ON IMAGE PROCESSING. ICIP '98. CHICAGO, IL, OCT. 4 - 7, 1998, INTERNATIONAL CONFERENCE ON IMAGE PROCESSING, LOS ALAMITOS, CA : IEEE COMPUTER SOC, US, vol. VOL. 1 CONF. 5, 4 October 1998 (1998-10-04), pages 455-459, XP000953825 ISBN: 0-8186-8822-X
- LANGELAAR G.C.; SETYAWAN I.; LAGENDIJK R.L.: "Watermarking digital image and video data. A state-of-the-art overview" IEEE SIGNAL PROCESSING MAGAZINE, vol. 17, no. 5, September 2000 (2000-09), pages 20-46, XP000992265

## Description

The present invention relates to a watermark, and more particularly, to an apparatus and method for embedding a watermark into original information, transmitting the watermarked information, and reconstructing the watermark.

With the development of communications technologies based on networks, multimedia information is stored or transmitted more frequently in a digital form. When digital information is copied, it is almost impossible to distinguish the copied digital information from the original digital information. Therefore, as a method to claim a right on the original information, identification information (hereinafter referred to as "a watermark") is embedded in the original information. Copyright information of the original information, the signature of the copyright holder, or a mark is mainly used as a watermark.

If the size of data embedded into the original information increases, the watermarked information becomes robust against external attacks while the quality of the watermarked information is degraded. If the size of data embedded into the original information decreases, the result is the opposite. That is, there is a trade-off between the size of a watermark and the quality of the watermarked information. When text data is embedded as a watermark, the text data usually takes less than 100 bits, and therefore there is no problem. However, when image data is embedded as a watermark, for example, even a binary image of 32 x 32 pixels, which is relatively small, needs the embedding of 1024 bits, and therefore the quality of the original information is degraded. However, necessity for embedding a watermark image has increased because image data is more discriminating and user-friendly than text data.

In prior arts, a variety of watermark embedding methods have been disclosed. However, all the methods are mainly about where and how watermarked data is embedded into original information.

US 2001/0020270 discloses fragile watermarking for objects in which a watermark is encoded such as into a 3-dimensional object in a fragile manner using a key. The pre-characterising portion of the appended claims are based on this document. Also, WO 99/63443 discloses a method for embedding an entire image audio or video watermark sequence within another image audio or video data sequence with a minimum loss of data quality by exploiting the de-correlation property of data coefficients in the orthogonal transform domain.

According to the present invention there is provided an apparatus and method as set forth in the appended claims. Preferred features of the invention will be apparent from the dependent claims, and the description which follows.

Exemplary embodiments of the present invention aim to provide an apparatus and method for embedding a watermark into original information, transmitting the watermarked information, and reconstructing the watermark in which the size of embedded data is greatly reduced and/or in which the watermark is more robust to attacks and/or in which the watermark is easily reconstructed to a destination.

According to one aspect of the present invention there is provided a method for embedding a watermark into original information. The method includes (a) embedding a predetermined number of components of a plurality of components constituting the watermark into the original information, and (b) using the remaining components as keys for reconstructing the watermark.

It is preferable that step (a) includes (a1) decomposing the watermark into a plurality of components, and step (a1) includes decomposing the watermarked image into a color component, a location component, and a size component.

It is also preferable that the decomposing includes (a11) obtaining a plurality of sub blocks by dividing the watermarked image into areas having identical color components, (a12) generating a bit stream expressing the color components of the obtained sub blocks, and (a13) embedding the generated bit stream into the original information.

It is also preferable that step (a11) includes dividing the watermarked image into at least one binary image, and obtaining a plurality of sub blocks by dividing the obtained binary image into areas of which color components are expressed by an identical bit value.

According to another aspect of the present invention, there is provided a method for embedding a watermark image into original information. The method includes (a) retrieving the watermark image while changing the size of an area, and if there is an area of which color component is expressed by an identical bit value, extracting the area as a sub block, (b) generating a bit stream expressing the color components of extracted sub blocks, and (c) embedding the generated bit stream into the original information.

It is preferable that step (a) includes (a1) dividing the watermark image into at least one binary image, (a2) retrieving the watermark image while changing the size of an area, and if there is an area of which color component is expressed by an identical bit value, extracting the area as a sub block, and (a3) repeating step (a2) for the remaining binary images.

It is also preferable that step (b) includes generating a bit stream expressing the color component by arranging bit values corresponding to sub blocks in order of sub block size.

According to still another aspect of the present invention, there is provided a method for embedding a watermark into original information and transmitting the original information. The method includes (b) embedding only a predetermined number of components of a plurality of components constituting the watermark into the original information and transmitting the original information, and (c) transmitting the remaining components as keys needed for reconstructing the watermark.

It is preferable that before step (b) , the method further includes (a) decomposing the watermark into a plurality of components.

According to still another aspect of the preset invention, there is provided a method for reconstructing a watermark. The method includes (a) extracting a predetermined number of components of a plurality of components constituting the watermark from original information, and (b) reconstructing the watermark by combining the remaining components received as keys.

It is preferable that step (a) includes (a1) extracting a bit stream expressing the color components of the watermark from a watermarked original information.

It is also preferable that step (b) includes (b1) receiving the location and size components of the watermark as keys and, by combining the keys and the color components, reconstructing the watermark.

According to still another aspect of the present invention, there is provided an apparatus for embedding a watermark into original information. The apparatus includes a watermark decomposing unit which decomposes the watermark into a plurality of components, a watermark embedding unit which embeds a predetermined number of components of the plurality of components obtained through the watermark decomposing unit, and a key generating unit which outputs the remaining components of the plurality of components obtained through the watermark decomposing unit as keys for reconstructing the watermark.

It is preferable that the watermark decomposing unit obtains a plurality of sub blocks by dividing the watermark image into areas having an identical color component and generates a bit stream expressing the color components of the obtained sub blocks, and the watermark embedding unit embeds the bit stream generated by the watermark decomposing unit into the original information.

For a better understanding of the invention, and to show how embodiments of the same may be carried into effect, reference will now be made, by way of example, to the accompanying diagrammatic drawings in which:
Figure 1 is a diagram of the structure of a watermark embedding apparatus according to a preferred embodiment of the present invention;
Figure 2 is a diagram of the structure of an apparatus which is added to the watermark embedding apparatus of Figure 1 and stores or transmits watermarked original information;
Figure 3 is a reference diagram showing a process for decomposing a watermark according to the present invention;
Figure 4 is a reference diagram showing a preferred embodiment of a process for decomposing a watermark;
Figures 5A and 5B are reference diagrams showing a process for decomposing a watermarked image according to a preferred embodiment of the present invention;
Figure 6 is a reference diagram showing a process for reconstructing a watermark in another system;
Figure 7 is a flowchart for explaining a watermark embedding method according to the present invention;
Figure 8 is a flowchart for explaining a watermark embedding method according to a preferred embodiment of the present invention;
Figure 9 is a flowchart for explaining a watermark transmitting method according another preferred embodiment of the present invention;
Figure 10 is a flowchart for explaining a watermark reconstructing method;
Figure 11 shows examples of watermarked images used for experiment;
Figure 12 is a table for comparing bit streams of color components extracted according to the present invention from the test images of Figure 11;
Figure 13 shows original images used for experiment;
Figure 14 is a graph comparing the picture quality of watermarked images obtained according to the present invention and the picture quality of images obtained according to the prior art;
Figure 15 is a graph showing the robustness of an image watermarked according to the present invention;
Figure 16 is a reference diagram showing the filtering robustness of an image watermarked according to the present invention
Figure 17 is a reference diagram showing the cropping robustness of an image watermarked according to the present invention; and
Figure 18 is a reference diagram showing the warping robustness of an image watermarked according to the present invention.

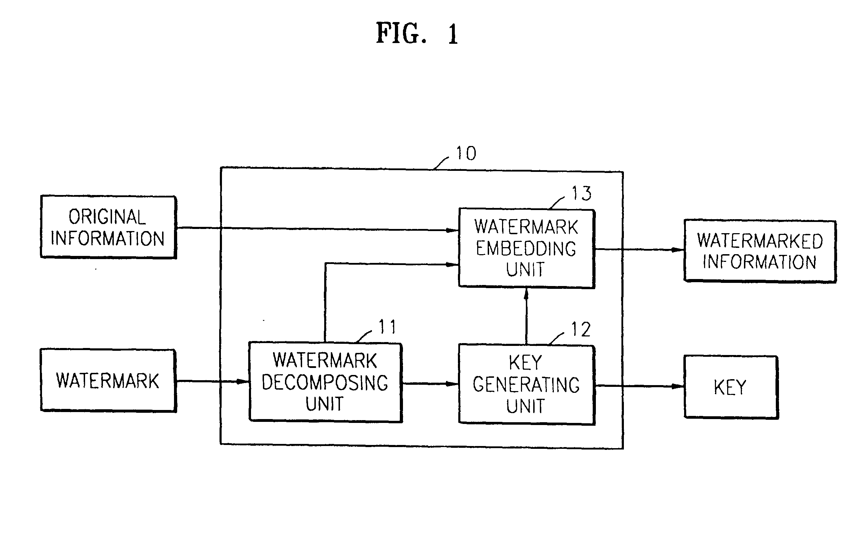

Referring to Figure 1, a watermark embedding apparatus 10 according to a preferred embodiment of the present invention receives original information and a watermark, embeds a part of data constituting the watermark into the original information, and outputs watermarked information and a key. The watermark embedding apparatus 10 is formed with a watermark decomposing unit 11, a key generating unit 12, and a watermark embedding unit 13.

The watermark decomposing unit 11 decomposes a watermark into a plurality of components. A watermark may be expressed by one of a variety of expression methods. That is, the watermark decomposing unit 11 decomposes a watermark into two or more components that can be later combined to reconstruct the watermark. At this time, when a watermark image that is input is not a binary image, the watermark image is converted into at least one binary image and then decomposed. For example, when a watermark image is a color image, the watermark image is divided into binary images by color, and each binary image is decomposed. In the present embodiment, a binary watermark image is decomposed into a color component, a location component, and a size component.

The key generating unit 12 generates a verification key. The verification key indicates data needed in extracting a watermark from watermarked information or reconstructing a watermark from extracted data. In the present embodiment, the key generating unit 12 stores the remaining components, that is, the plurality of components obtained through the watermark decomposing unit 11 except for the components embedded into the original information, as a key for reconstructing the watermark, or when the watermark image is transmitted, transmits the remaining components to a destination terminal separately from the watermark information.

The watermark embedding unit 13 embeds some of the plurality of components generated by the watermark decomposing unit 11 into the original information. A method for embedding watermark into original information may be selected in a variety of ways. Any of prior art watermark embedding methods may be used. For example, in one method, after the original information is converted into data in a frequency domain through Discrete Cosine Transform (DCT), Faster Fourier Transform (FFT), or Discrete Wavelet Transform (DWT), watermark may be embedded into a part to which human eyesight is less sensitive. In addition, when watermark is embedded, at least a scaling factor may be assigned The scaling factor is a factor adjusting for a trade-off between the robustness of a watermark and the picture quality of a watermarked image when the original information is an image. When the scaling factors are assigned, the values of the scaling factors may be different from one another. However, since the watermark should be perfectly reconstructed in a destination terminal, preferably, an embedding method using lossy compression is not used. Also, preferably, considering errors caused by attacks, a compression method, such as a run-length method, which can cause error propagation is not used.

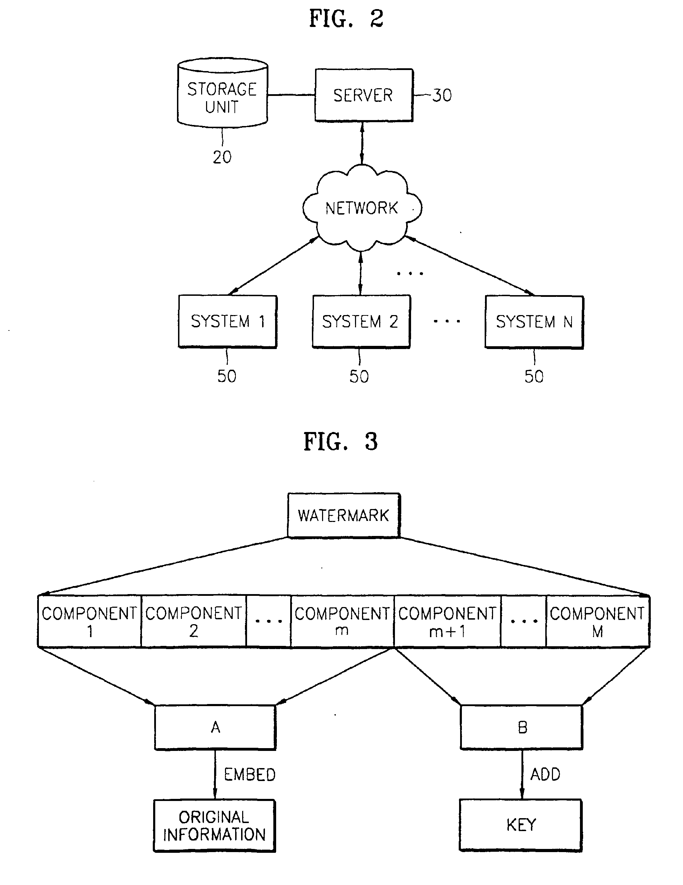

Figure 2 is a diagram of the structure of an apparatus which is added to the watermark embedding apparatus of Figure 1 and stores or transmits watermarked original information.

Referring to Figure 2, the watermark transmitting apparatus includes a storage unit 20 and a server 30. The storage unit 20 stores the information watermarked according to the present invention and the key. The storage unit 20 may be implemented as a general storage unit for storing watermarked information and a security storage unit for storing keys. The server 30 transmits the watermarked information and key to another system 50 through the network. The network may be a Local Area Network (LAN) or a Wide Area Network (WAN) such as the Internet or may include both. The system 50 can extract and reconstruct the watermark from the watermarked information by using the received key. In addition, with a display apparatus (not shown) and/or a printing apparatus (not shown), the system 50 can display or print the watermarked information and reconstructed watermark.

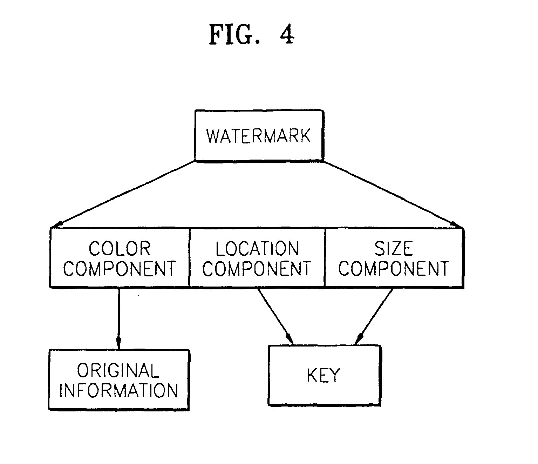

Figures 3 and 4 are reference diagrams showing a process for decomposing a watermark according to the present invention.

Referring to Figure 3, the watermark decomposing unit 11 decomposes the watermark into M components (where M is an integer). Among M components, A which is m components (m is an integer less than M), is embedded as a watermark into the original information, and B, which is the remaining components (M-m), is used as a key.

Referring to Figure 4, according to a preferred embodiment of the present invention, a watermark image is decomposed into a color component, a location component, and a size component. Then the color component is embedded into the original information, and the location component and the size component are used as keys.

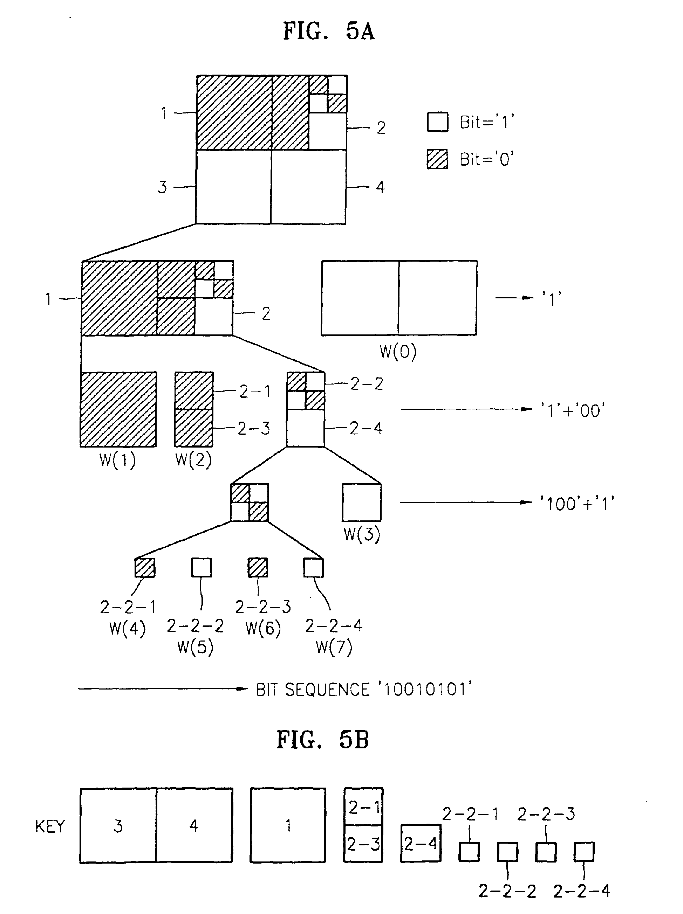

Figures 5A and 5B are reference diagrams showing a process for decomposing a watermark image according to a preferred embodiment of the present invention.

As described above, the watermark decomposing unit 11 divides a watermark image into binary images and then decomposes the binary images. Referring to Figure 5A, binary images are shown as 4 areas represented by reference numbers 1 through 4. Shaded parts indicate bit '0', and unshaded parts indicate bit '1'. Since areas 3 and 4 have the same color components, that is, the color components are expressed by the same bit, areas 3 and 4 are extracted as sub block W(0). Next, area 1 is extracted as sub block W(1). Then, in area 2, areas 2-1 and 2-3, in which color components are expressed by the same bit, are extracted as sub block W(2). In the remaining area, area 2-4, in which the color component is expressed by the same bit, is extracted as sub block W(3). Then, areas 2-2-1, 2-2-2, 2-2-3, and 2-2-4 are extracted as sub blocks W(4), W(5), W(6), and W(7), respectively. If bits corresponding to sub blocks in order of extraction are arranged, a bit stream '10010101' is obtained. That is, '10010101' is a bit stream expressing color components.

Referring to Figure 5B, the size and location components which are obtained in the watermark image decomposing process of Figure 5A are shown. The size of a rectangle indicates the size component of a corresponding sub block, and the reference numbers marked in the rectangles indicate the location components of corresponding sub blocks. The size and location components may be expressed in a variety of ways.

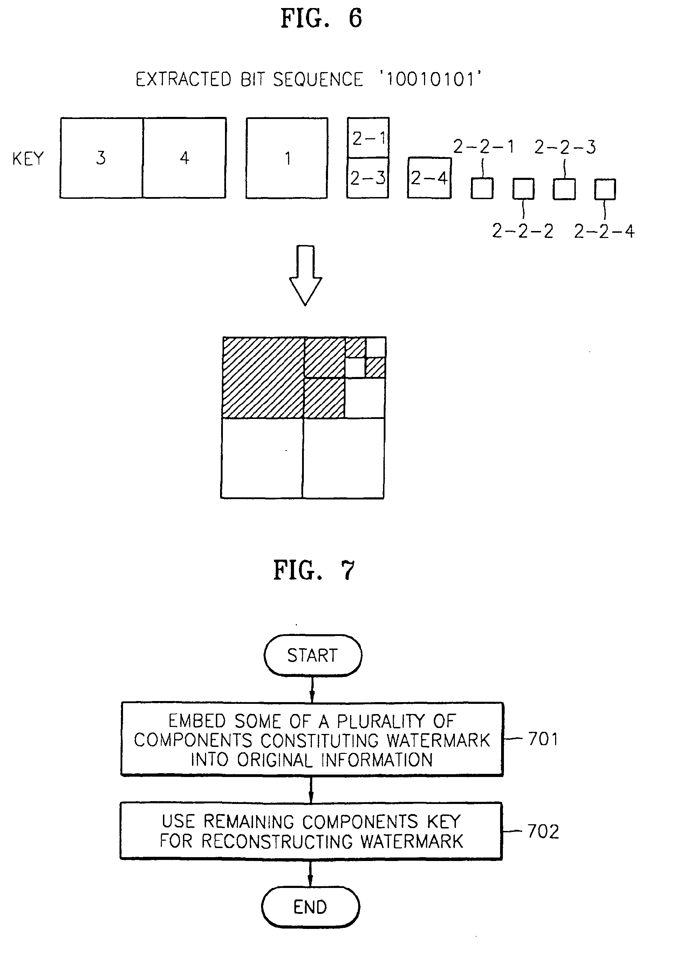

Figure 6 is a reference diagram showing a process for reconstructing a watermark in another system. Referring to Figure 6, a system 50 extracts bit stream '10010101' that indicates the color component from the watermarked image and then, by combining the size and location components received as keys, reconstructs the watermark.

Based on the structure described above, a watermark embedding method and transmitting method according to a preferred embodiment of the present invention will now be explained.

Figure 7 is a flowchart for explaining a watermark embedding method according to the present invention.

Referring to Figure 7, the watermark embedding apparatus embeds some of a plurality of components constituting a watermark into original information in step 701 and uses the remaining components as keys for reconstructing the watermark in step 702. Here, using the components as keys means storing the components as keys or transmitting the components as keys when the watermarked information obtained in step 701 is transmitted to a destination.

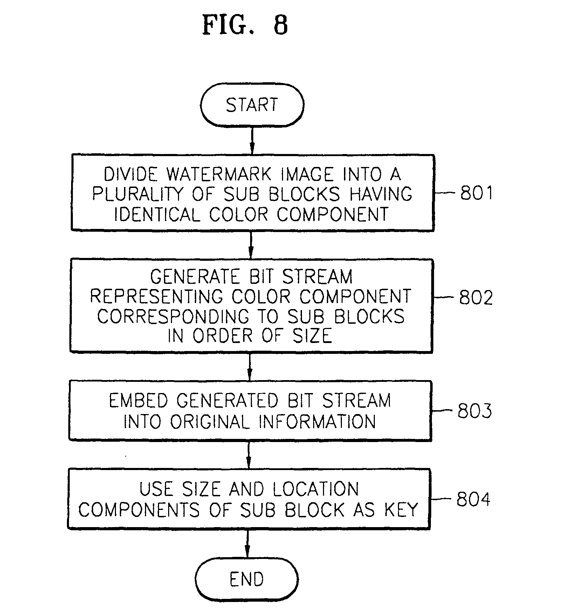

Figure 8 is a flowchart for explaining a watermark embedding method according to a preferred embodiment of the present invention.

Referring to Figure 8, the watermark embedding apparatus divides the watermarked image into a plurality of sub blocks having identical color components in step 801 and generates a bit stream expressing the color components of the obtained sub blocks in step 802. More specifically, when the number of pixels in a binary image constituting the watermark image is X x Y = (x,y), the watermark embedding apparatus places the number of pixels constituting a sub block as (x, y) and initializes a k value as '0'. Next, the watermark embedding apparatus searches the entire area of the binary image, and if there is an area which is expressed by an identical bit value and has the same size as the sub block that is set first, extracts the area as sub block W(k) . If all bits in the extracted sub block is '1', W(k) is 1, and if '0', W(k) is 0. If the sub block is extracted, the k value increases by 1. Again, by changing the size of the sub block into (x/2, y) and (x, y/2), the water embedding apparatus searches and retrieves the watermark image. At this time, the extracted sub block is excluded from the search. Until (x, y) = (1, 1), by reducing the number of pixels in width or in length by half, search and retrieval is repeatedly performed to extract a corresponding sub block. If a bit obtained from each sub block is arranged in order of sub block size, a bit stream is generated.

The watermark embedding apparatus embeds the obtained bit stream into the original information in step 803. As a method for embedding the bit stream into the original information, an applicable prior art watermark embedding method may be used. In addition, by giving different scale factors to bits, bits may be embedded. A large scale factor is given to an important component, while a small scale factor is given to a less important component. For example, a large scale factor is assigned to a bit of a sub block having a relatively large size, while a small scale factor is assigned to a bit of a sub block having a relatively small size. Meanwhile, the size and location components of a sub block are used as keys in step 804.

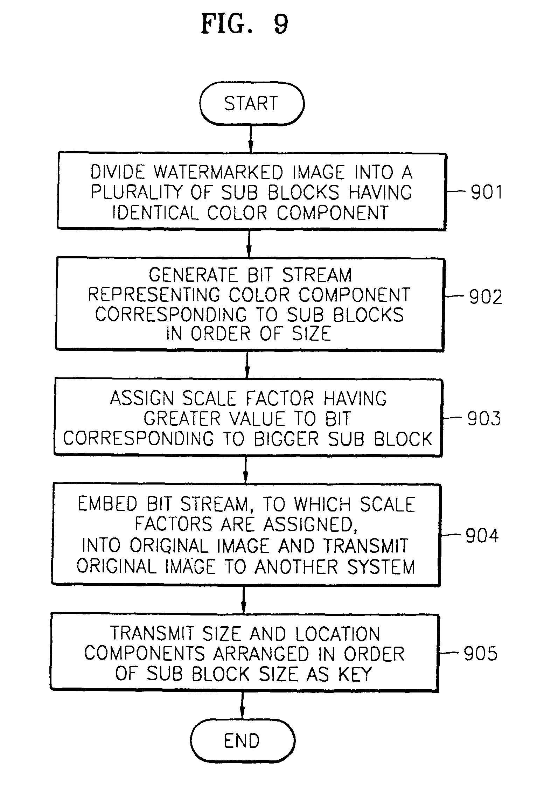

Figure 9 is a flowchart for explaining a watermark transmitting method according another preferred embodiment of the present invention.

Referring to Figure 9, the watermark transmitting apparatus divides the watermarked image into a plurality of sub blocks having identical color components in step 901 and generates a bit stream expressing color components corresponding to sub blocks in order of size in step 902. These steps are the same as steps 801 and 802 of Figure 8. In addition, a scale factor having a greater value is given to a sub block which is relatively large in step 903. Next, the watermark transmitting apparatus embeds a bit stream, to which scale factors are assigned, into the original image and transmits the original image to another system 50 in step 904. The original image includes both a still image and a moving image. Likewise, as a method for embedding the bit stream into the original image, an applicable prior art method may be used. In addition, by giving different scale factors to bits, bits may be embedded. A large scale factor is given to an important component, while a small scale factor is given to a less important component. For example, a large scale factor is assigned to a bit of a sub block having a relatively large size, while a small scale factor is assigned to a bit of a sub block having a relatively small size. Meanwhile, the size and location components are arranged in order of sub block size, and then transmitted as keys to another system 50 in step 905.

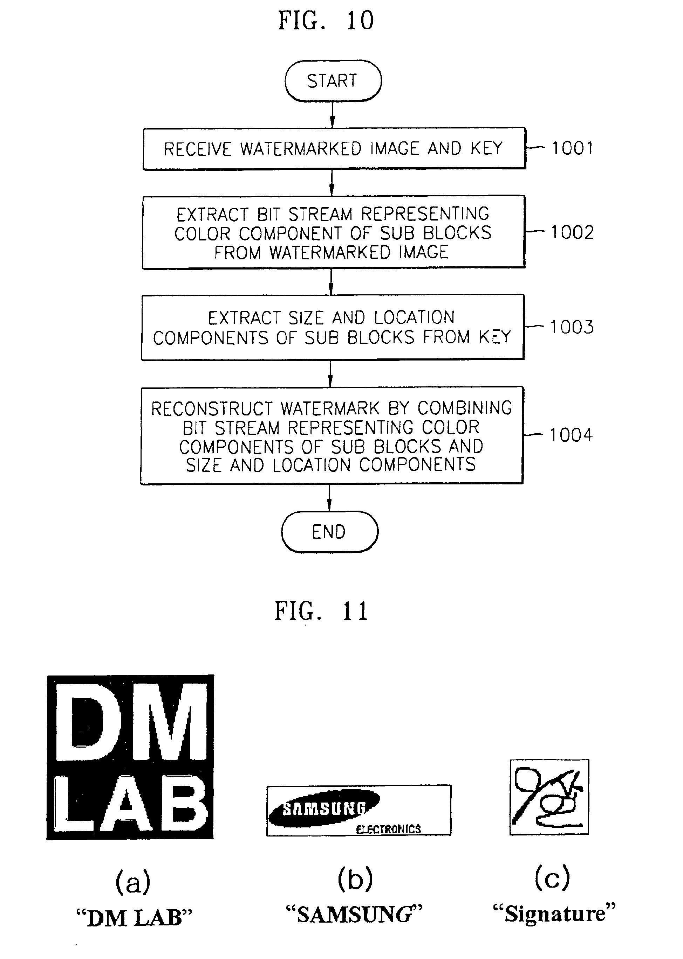

Figure 10 is a flowchart for explaining a watermark reconstructing method.

Referring to Figure 10, the system 50 receives the watermarked image and key through the network in step 1001 and extracts the bit stream expressing color components of sub blocks from the watermarked image in step 1002. Meanwhile, the system 50 extracts the size and location components of sub blocks from the received keys in step 1003. According to the bit stream extracted in step 1002 and the size components extracted in step 1003, sub blocks having corresponding sizes and bit values are reconstructed. Finally, referring to the location components, by rearranging the reconstructed sub blocks, the watermark image is reconstructed in step 1004.

As described above, according to the present invention, in order to reconstruct the watermark image, embedded components and keys should be accurate. This accuracy guarantees the robustness of the methods and apparatuses for embedding and transmitting watermarks. For example, if the location and size information of other watermark images is received as a key, the number of sub blocks does not match and the watermark image cannot be reconstructed. Even when a bit stream expressing embedded components is extracted with an algorithm for embedding the watermark, if the size and location components of sub blocks are not known, the watermark image cannot be reconstructed correctly. Though keys are hacked, if the embedded color component is not known, the bits of the sub blocks cannot be filled and therefore reconstruction is impossible.

The results of experiments on the performance of the watermark embedding apparatus according to the present invention are as follows. First, the apparatus used in the experiments employed a method in which an original image is DWT converted to obtain DWT coefficients, and if the bit value of a bit stream to be embedded is '0', the corresponding coefficient is replaced by a threshold value T1, and if the bit value is '1', the corresponding coefficient is replaced by a threshold value T2. A factor which determines the distance between T1 and T2 is a scale factor. The scale factor may be determined in a variety of ways. The present experiment employed a method disclosed by Sang-Wook Keem, Sang-Heum Oh, Yong-Jun Ryu, and Keyn-Young Lee in "A Robust digital watermarking method based on DWT" in Proc. IEEK. Summer Conference 2001, vol 24, No. 1, pp77-80, Jun 2001, in which the scale factor is α, and if 0.8≦ α≦ 1, Δα = 0.2; if 0.45≤ α≤ 0.6, Δα = 0.15; and if 0.1≤ α≤ 0.3, Δα = 0.1.

Figure 11 shows examples of watermark images used for experiment. Referring to Figure 11, (a) "DM LAB" needs 128 x 128 bits/pixel, (b) "SAMSUNG" needs 150 x 39 bits/pixel, and (c) "Signature" needs 64 x 64 bits/pixel.

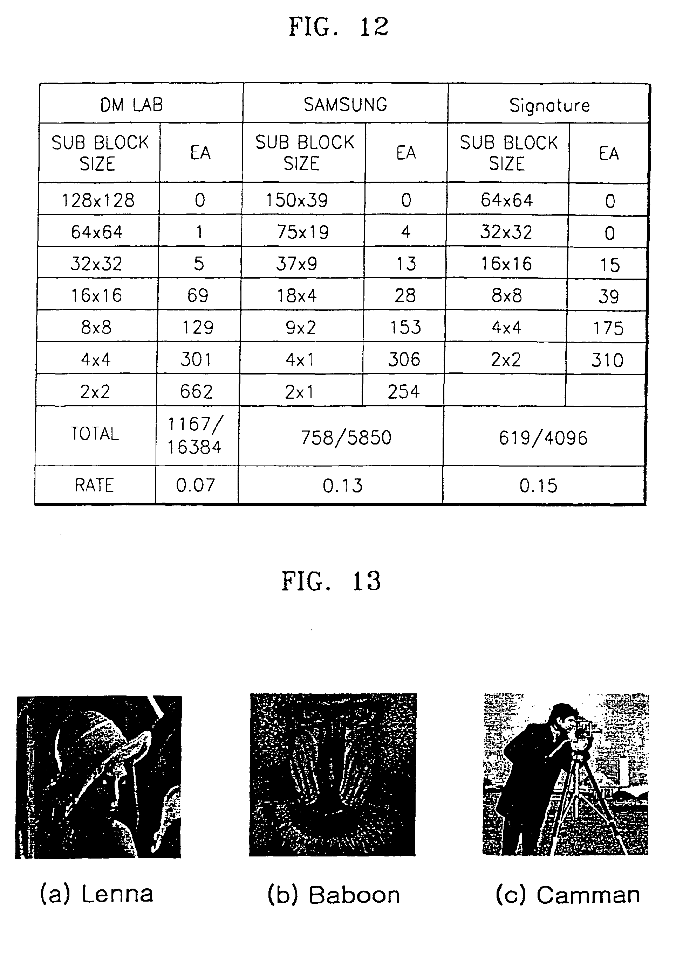

Figure 12 is a table for comparing bit streams of color components extracted according to the present invention from the test images of Figure 11. Referring to Figure 12, it is shown that (a) "DM LAB" can be expressed by 1167 bits, which is a 90% decrease from the prior art which use 16384 bits. (b) "SAMSUNG" and (c) "Signature" can be expressed by an 85% decrease in bits.

Figure 13 shows original images used for experiment. Referring to Figure 13, each of (a) "Lenna", (b) "Baboon", and (c) "Camman" needs 256 x 256 pixels.

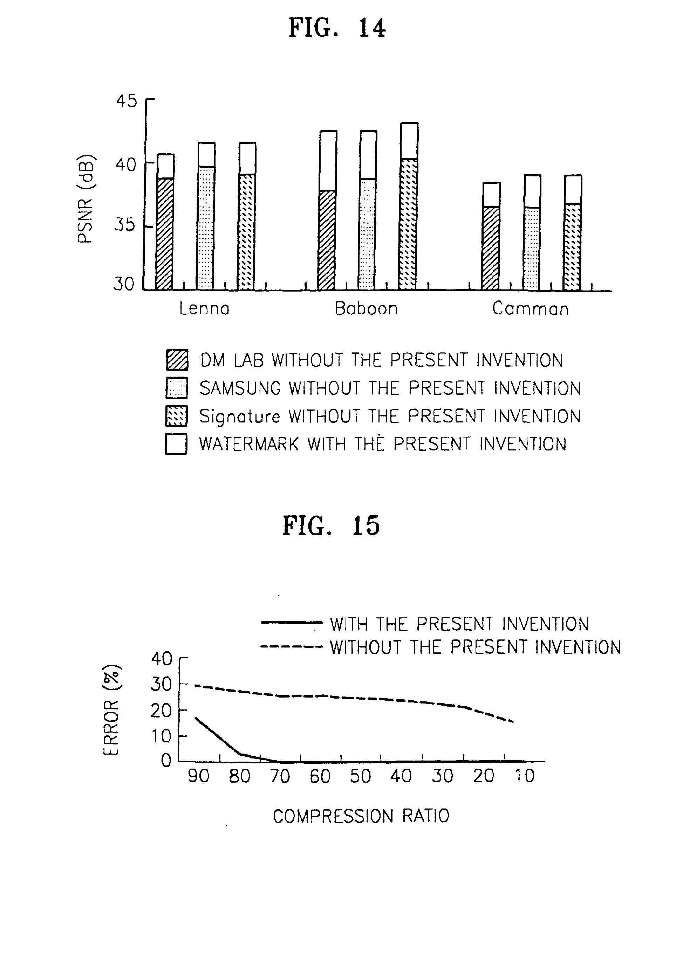

Figure 14 is a graph comparing the picture quality of watermark images obtained according to the present invention and the picture quality of images obtained according to the prior art. According to the method described by Sang-Wook Keem, Sang-Heum Oh, Yong-Jun Ryu, and Keyn-Young Lee in "A Robust digital watermarking method based on DWT" in Proc. IEEK. Summer Conference 2001, vol 24, No. 1, pp77-80, Jun 2001, the watermark is embedded three times. However, since three times embedding of the watermark image with a large amount of data such as "DM LAB" without compression is impossible, the watermark image is only embedded once.

Referring to Figure 14, the picture quality improves a minimum of 1.8dB and a maximum of 5.63dB when the watermark image is embedded according to the method of the present invention. Hence, PSNR means Pick Signal to Noise Ratio.

Figure 15 is a graph showing the robustness of an image watermarked according to the present invention.

Referring to Figure 15, after "DM LAB" is embedded into "Baboon" and then compressed, by changing the compression ratio from 10% to 90%, JPEG compression is performed. As the results, the method according to the present invention showed 2.33% error (381 bits among 16384 bits), and the method according to the prior art showed 22.86% error (3745 bits among 16384 bits). This shows that the present invention reduces the error generation ratio ten times more than the prior art.

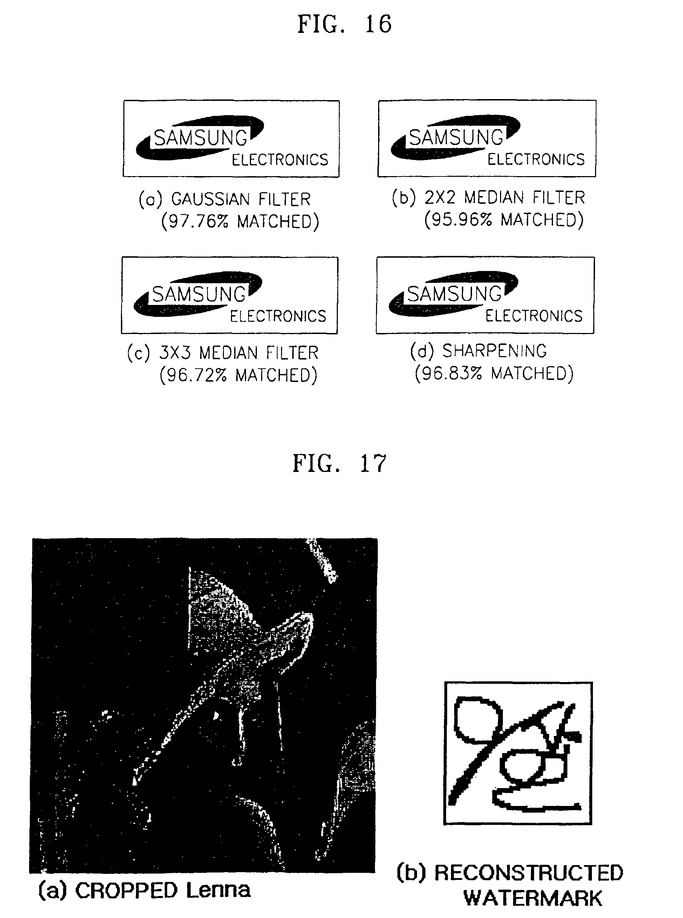

Figure 16 is a reference diagram showing the filtering robustness of an image watermarked according to the present invention.

Referring to Figure 16, after "SAMSUNG" is embedded into "Camman" and then JPEG-compressed, the robustness of "Stirmark Attack" filtering was experimented on, and the results are shown. (a) shows an extracted watermark image after passing Gaussian filter, (b) shows an extracted watermark image after passing a 2 x 2 median filter, (c) shows an extracted watermark image after passing a 3 x 3 median filter, and (d) shows an extracted watermark image when the edge of the 3 x 3 watermarked image is emphasized. All diagrams show over a 95% reconstruction ratio.

Figure 17 is a reference diagram showing the cropping robustness of an image watermarked according to the present invention.

Referring to Figure 17, (a) shows a cropped "Lenna", and (b) shows watermarked image "Signature" reconstructed from (a). Despite this cropping attacks, "Signature" shows a robustness of over 97% reconstruction.

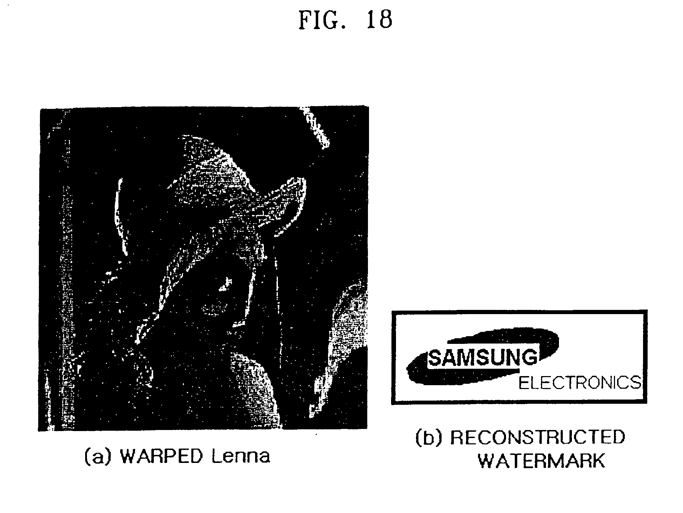

Figure 18 is a reference diagram showing the warping robustness of an image watermarked according to the present invention.

Referring to Figure 18, (a) shows a warped "Lenna", and (b) shows watermarked image "SAMSUNG" reconstructed from (a). Despite this warping attacks, "SAMSUNG" shows a robustness of over 97% reconstruction.

As described above, since the size of data to be embedded is greatly reduced according to the present invention, degradation of watermarked information is prevented and the information becomes more robust against attacks occurring in a variety of ways in transmitting the information. That is, a watermark to be embedded is decomposed into a plurality of components, and just some of the components are embedded such that the picture quality is improved, and the remaining components are transmitted as keys such that the information becomes more robust against attacks. This is because in a destination terminal, only a combination of some components extracted from the original information and the remaining components transmitted as keys can completely reconstruct the watermark.

## Claims

1. A method for embedding a bit stream partially representing a watermark image into original information, the method **characterised by**:
dividing a watermark image into a plurality of sub blocks having colour components;
generating a bit stream to represent the colour component of each corresponding sub block in order of size;
embedding the generated bit stream into the original information; and
using size and location components of the sub blocks as a key.

2. The method of claim 1, wherein the watermark image is initially divided into binary images prior to dividing the watermark image.

3. A method for reconstructing a watermark image **characterised by**:
receiving original information embedded with a bit stream, and a key;
extracting the bit stream representing colour components of sub blocks in order of size from the original information;
extracting size and location components of the sub blocks from the key; and
reconstructing the watermark image by combining the bit stream representing colour components of sub blocks and size and location components.

4. An apparatus for embedding a bit stream partially representing a watermark image into original information, the apparatus **characterised by**:
a watermark decomposing unit (11) arranged to divide a watermark image into a plurality of sub blocks having colour components, and to generate a bit stream representing the colour component of each corresponding sub block in order of size;
a watermark embedding unit (13) arranged to embed the generated bit stream into the original information; and
a key generating unit (12) arranged to use size and location components of the sub blocks to generate a key.

5. The apparatus of claim 4, wherein the watermark decomposing unit (11) is arranged to initially divide the watermark image into binary images.

6. The apparatus of claims 4 or 5, wherein the watermark decomposing unit (11) is arranged to divide the watermark image into a plurality of sub blocks having identical colour components.

7. The apparatus of claim 6, wherein the watermark embedding unit (13) embeds the bit stream after assigning a scaling factor to the bit stream.

8. The apparatus of claim 7, wherein the watermark embedding unit (13) embeds the bit stream after assigning a different scaling factor to at least a predetermined number of bits in the bit stream.

9. The apparatus of claim 8, wherein the watermark embedding unit (13) assigns a large scaling factor to a bit in the bit stream, the bit corresponding to a large sub block.

## Patentansprüche

1. Verfahren zum Einbetten eines Bitstroms, der teilweise ein Wasserzeichenbild repräsentiert, in Originalinformationen, wobei das Verfahren durch Folgendes gekennzeichnet ist:
Aufteilen eines Wasserzeichenbildes in mehrere Teilblöcke, die Farbkomponenten aufweisen;
Erzeugen eines Bitstroms zum Repräsentieren der Farbkomponente jedes entsprechenden Teilblocks der Größe nach geordnet;
Einbetten des erzeugten Bitstroms in die Originalinformationen; und
Verwenden von Größen- und Ortskomponenten der Teilblöcke als Schlüssel.

2. Verfahren nach Anspruch 1, wobei das Wasserzeichenbild anfänglich vor dem Aufteilen des Wasserzeichenbildes in binäre Bilder aufgeteilt wird.

3. Verfahren zum Rekonstruieren eines Wasserzeichenbildes, **gekennzeichnet durch**:
Empfangen von mit einem Bitstrom eingebetteten Originalinformationen und eines Schlüssels;
Extrahieren des Bitstroms, der Farbkomponenten von Teilblöcken der Größe nach geordnet repräsentiert, aus den Originalinformationen;
Extrahieren von Größen- und Ortskomponenten der Teilblöcke aus dem Schlüssel; und
Rekonstruieren des Wasserzeichenbildes **durch** Kombinieren des Bitstroms, der Farbkomponenten von Teilblöcken repräsentiert, und von Größen- und Ortskomponenten.

4. Vorrichtung zum Einbetten eines Bitstroms, der teilweise ein Wasserzeichenbild repräsentiert, in Originalinformationen, wobei die Vorrichtung durch Folgendes gekennzeichnet ist:
eine Wasserzeichen-Zerlegungseinheit (11), die dafür ausgelegt ist, ein Wasserzeichenbild in mehrere Teilblöcke aufzuteilen, die Farbkomponenten aufweisen, und einen Bitstrom zu erzeugen, der die Farbkomponente jedes entsprechenden Teilblocks der Größe nach geordnet repräsentiert;
eine Wasserzeichen-Einbettungseinheit (13), die dafür ausgelegt ist, den erzeugten Bitstrom in die Originalinformationen einzubetten; und
eine Schlüsselerzeugungseinheit (12), die dafür ausgelegt ist, Größen- und Ortskomponenten der Teilblöcke zu verwenden, um einen Schlüssel zu erzeugen.

5. Vorrichtung nach Anspruch 4, wobei die Wasserzeichen-2erlegungseinheit (11) dafür ausgelegt ist, anfänglich das Wasserzeichenbild in binäre Bilder aufzuteilen.

6. Vorrichtung nach Anspruch 4 oder 5, wobei die Wasserzeichen-2erlegungseinheit (11) dafür ausgelegt ist, das Wasserzeichenbild in mehrere Teilblöcke aufzuteilen, die identische Farbkomponenten aufweisen.

7. Vorrichtung nach Anspruch 6, wobei die Wasserzeichen-Einbettungseinheit (13) den Bitstrom nach Vergeben eines Skalierungsfaktors an den Bitstrom einbettet.

8. Vorrichtung nach Anspruch 7, wobei die Wasserzeichen-Einbettungseinheit (13) den Bitstrom nach Vergeben eines verschiedenen Skalierungsfaktors an mindestens eine vorbestimmte Anzahl von Bit in dem Bitstrom einbettet.

9. Vorrichtung nach Anspruch 8, wobei die Wasserzeichen-Einbettungseinheit (13) einen großen Skalierungsfaktor an ein Bit in dem Bitstrom vergibt, wobei das Bit einem größeren Teilblock entspricht.

## Revendications

1. Procédé destiné à incorporer un train binaire représentant partiellement une image de filigrane dans des informations originales, le procédé étant **caractérisé par** le fait de :
diviser une image de filigrane en une pluralité de sous-blocs ayant des composantes de couleurs ;
générer un train binaire pour représenter la composante de couleur de chaque sous-bloc correspondant par ordre de taille ;
incorporer le train binaire généré aux informations originales ; et
utiliser des composantes de taille et de position des sous-blocs en tant que clé.

2. Procédé selon la revendication 1, dans lequel l'image de filigrane est initialement divisée en des images binaires avant de diviser l'image de filigrane.

3. Procédé destiné à reconstruire une image de filigrane, **caractérisé par** le fait de :
recevoir des informations originales dans lesquelles est incorporé un train binaire, et une clé ;
extraire des informations originales le train binaire représentant des composantes de couleurs de sous-blocs par ordre de taille ;
extraire de la clé des composantes de taille et de position des sous-blocs ; et
reconstruire l'image de filigrane en combinant le train binaire représentant des composantes de couleurs de sous-blocs et des composantes de taille et de position.

4. Appareil destiné à incorporer un train binaire représentant partiellement une image de filigrane dans des informations originales, l'appareil étant **caractérisé par** :
une unité de décomposition de filigrane (11) conçue pour diviser une image de filigrane en une pluralité de sous-blocs ayant des composantes de couleurs, et pour générer un train binaire afin de représenter la composante de couleur de chaque sous-bloc correspondant par ordre de taille ;
une unité d'incorporation de filigrane (13) conçue pour incorporer le train binaire généré dans les informations originales ; et
une unité génératrice de clé (12) conçue pour utiliser des composantes de taille et de position des sous-blocs afin de générer une clé.

5. Appareil selon la revendication 4, dans lequel l'unité de décomposition de filigrane (11) est conçue pour diviser initialement l'image de filigrane en des images binaires.

6. Appareil selon les revendications 4 ou 5, dans lequel l'unité de décomposition de filigrane (11) est conçue pour diviser l'image de filigrane en une pluralité de sous-blocs ayant des composantes de couleurs identiques.

7. Appareil selon la revendication 6, dans lequel l'unité d'incorporation de filigrane (13) incorpore le train binaire après avoir affecté un facteur d'échelle au train binaire.

8. Appareil selon la revendication 7, dans lequel l'unité d'incorporation de filigrane (13) incorpore le train binaire après avoir affecté un facteur d'échelle différent à au moins un nombre prédéterminé de bits du train binaire.

9. Appareil selon la revendication 8, dans lequel l'unité d'incorporation de filigrane (13) affecte un facteur d'échelle élevé à un bit du train binaire, le bit correspondant à un grand sous-bloc.
